# EUROPÄISCHE PATENTSCHRIFT

(11) **EP 2 964 447 B1**
(45) Veröffentlichungstag und Bekanntmachung des Hinweises auf die Patenterteilung: **21.02.2018**
(21) Anmeldenummer: 14793857.5
(22) Anmeldetag: 06.11.2014
(51) Int. Cl.: B29C 63/02, B29C 65/14

(54) **VERFAHREN ZUM AUFBRINGEN EINER BESCHICHTUNG AUF WERKSTÜCKE UND VORRICHTUNG ZUM BESCHICHTEN VON WERKSTÜCKEN**
METHOD FOR APPLYING A COATING ONTO WORKPIECES, AND DEVICE FOR COATING WORKPIECES
PROCÉDÉ DE DÉPÔT D'UN REVÊTEMENT SUR DES PIÈCES ET DISPOSITIF DE REVÊTEMENT DE PIÈCES

(30) Priorität: 07.11.2013 DE 102013222636
(43) Veröffentlichungstag der Anmeldung: 13.01.2016
(73) Patentinhaber: HOMAG GmbH, 72296 Schopfloch (DE)
(72) Erfinder: SCHMID, Johannes, 72181 Starzach (DE)
(74) Vertreter: Hoffmann Eitle
(86) Internationale Anmeldenummer: PCT/EP2014/073923
(87) Internationale Veröffentlichungsnummer: WO 2015/067692

(56) Entgegenhaltungen:
- EP-A1- 1 782 910
- EP-A1- 2 141 405
- EP-A1- 2 243 619
- EP-A1- 2 422 946
- EP-A2- 0 167 377
- WO-A1-00/43220
- WO-A1-2006/030920
- US-A1- 2002 008 089
- US-A1- 2013 025 793

## Beschreibung

### Technisches Gebiet

Die Erfindung betrifft ein Verfahren zum Aufbringen einer Beschichtung, die bevorzugt zumindest teilweise aus Kunststoff besteht, auf Werkstücke, die bevorzugt zumindest teilweise aus Holz, Holzwerkstoffen, Kunststoff oder dergleichen bestehen, bei dem die Beschichtung zumindest in einem Verbindungsbereich aktiviert wird und in diesem Bereich mit dem Werkstück verbunden wird. Des Weiteren ist erfindungsgemäß eine Vorrichtung zum derartigen Beschichten von Werkstücken vorgesehen.

### Stand der Technik

Vorrichtungen und Verfahren der eingangs genannten Art finden bei der Beschichtung von Werkstücken und zum Verbinden von Werkstücken mit einer Beschichtung breite Anwendung. Insbesondere wird Laserstrahlung zum Aktivieren verwendet, wie beispielsweise in der EP 1 163 864 B1 beschrieben. Durch die Laserstrahlung kann ein ausreichend hoher Energieeintrag in den Verbindungsbereich erfolgen, wodurch dieser aktiviert wird.

Der Einsatz eines Lasers bringt jedoch neben hohen Kosten eine aufwändige Konstruktion und einen vergleichsweise hohen Platzbedarf für die Laserkomponenten mit sich.

EP 2 141 405 A1 offenbart ein Verfahren zum Erneuern einer Rohrleitung unter Verwendung einer vor Ort ausgehärteten Harzimprägnierten Ummantelung, die durch ein transparentes Band versiegelt ist, um die Ummantelung vor der Imprägnierung mit Harz zu versiegeln.

Die WO 2006/030920 A1 lehrt ein Verfahren zum Herstellen eines Aufnahmemediums für optische Information. Des Weiteren betrifft die EP 1 782 910 A1 eine Vorrichtung zum dauerhaften Verbinden zweier Bauteile unter Zuhilfenahme einer Energiequelle.

### Darstellung der Erfindung

Vor diesem Hintergrund ist es Aufgabe der vorliegenden Erfindung, ein Verfahren und eine Vorrichtung zum Beschichten eines Werkstücks der eingangs genannten Art mit einfacherer Konstruktion und geringerem Platzbedarf zu ermöglichen.

Diese Aufgabe wird erfindungsgemäß durch das Verfahren gemäß Anspruch 1 zum Aufbringen einer Beschichtung und die Vorrichtung zum Beschichten von Werkstücken nach Anspruch 6 gelöst. Besonders bevorzugte Weiterbildungen der Erfindung sind in den abhängigen Ansprüchen angegeben.

Demzufolge ist ein Verfahren zum Aufbringen einer Beschichtung, die bevorzugt zumindest teilweise aus Kunststoff besteht, auf Werkstücke vorgesehen, die zumindest teilweise aus Holz oder Holzwerkstoffen, bestehen, wobei bei dem Verfahren die Beschichtung zumindest in einem Verbindungsbereich aktiviert, insbesondere aufgeschmolzen, wird und die Beschichtung durch den Verbindungsbereich mit dem Werkstück verbunden wird, wobei der Verbindungsbereich mit inkohärenter Strahlung, insbesondere Infrarotstrahlung, die von einer Leuchtdiodenanordnung abgegeben wird, zum Aktivieren, insbesondere Aufschmelzen, bestrahlt wird.

Des Weiteren ist erfindungsgemäß vorgesehen, dass die Vorrichtung zum Beschichten von Werkstücken, die zumindest teilweise aus Holz oder Holzwerkstoffen, bestehen, mit zumindest einer Beschichtung, die bevorzugt zumindest teilweise aus Kunststoff besteht, durch Verbinden der Beschichtung und des Werkstücks in einem Verbindungsbereich eine Aufnahme und eine Aktivierungseinrichtung aufweist, wobei die Aufnahme zum Aufnehmen zumindest eines Werkstücks dient und die Aktivierungseinrichtung eine Leuchtdiodenanordnung zur Bestrahlung des Verbindungsbereichs zum Aktivieren, insbesondere Aufschmelzen, der Beschichtung in dem Verbindungbereich aufweist, wobei die Leuchtdiodenanordnung zur Emission von Strahlung, insbesondere Infrarotstrahlung, dient und derart angeordnet ist, dass der Verbindungsbereich mit der Strahlung bestrahlt wird, und dass die Leuchtdiodenanordnung zumindest ein Array und bevorzugt mehrere Arrays aufweist, das/die jeweils mehrere Leuchtdioden-Chips aufweist/en. Durch die Verwendung inkohärenter Strahlung bzw. Strahlung, die von einer Leuchtdiodenanordnung abgegeben wird, kann der Verbindungsbereich min einfachen und platzsparenden konstruktiven Mitteln aktiviert werden, wobei insbesondere durch die Verwendung der Leuchtdiodenanordnung ein hoher Energieeintrag durch monochromatische Strahlung möglich ist.

Der Erfindung liegt der Gedanke zugrunde, die Beschichtung eines Werkstücks mit vermindertem konstruktivem Aufwand und Platzbedarf umzusetzen, ohne Einschränkungen hinsichtlich der Qualität der Verbindung zwischen der Beschichtung und dem Werkstück eingehen zu müssen. Insbesondere ist keine kohärente Strahlung nötig, die von einem Laser erzeugt wird. Auf diese Weise kann auf zahleiche aufwendige und Bauraum benötigende Bauteile einer Laservorrichtung wie Strahlführungsmittel, Strahlumlenkungmittel, Strahlbündelungsmittel etc. verzichtet werden.

Unter dem Verbindungsbereich ist im Allgemeinen der Bereich zu verstehen, in dem die Verbindung zwischen der Beschichtung und dem Werkstück erfolgt. Insbesondere ist unter dem Verbindungsbereich auch der zu verbindende Bereich zu verstehen, wenn noch keine Verbindung zwischen dem Verbindungsbereich und dem Werkstück stattgefunden hat. Insbesondere wird die Verbindung in dem Bereich erfolgen, in dem die Aktivierung stattfindet und anschließend eine ausreichende mechanische Verbindung, beispielsweise durch Andrücken, zwischen der Beschichtung und dem Werkstück erfolgt.

Unter der Aktivierung ist eine Energiezufuhr durch elektromagnetische Strahlung bzw. insbesondere zu verstehen, dass die Beschichtung in dem Verbindungsbereich durch elektromagnetische Strahlung chemisch verändert wird. Insbesondere wird das Aktivieren zumindest abschnittsweise zum Aufschmelzen der Beschichtung in dem Verbindungsbereich bzw. einer Verflüssigung der Beschichtung führen.

Unter der Beschichtung ist eine Schicht zu verstehen, die zumindest abschnittsweise auf das Werkstück aufgebracht werden soll. Die Beschichtung selbst kann aus mehreren Materialien, Abschnitten und/oder Lagen bestehen, so dass beispielsweise nur ein Teil einer Haftmittelschicht bzw. eine haftend machbare Schicht, die Teil der Beschichtung ist, aktiviert wird. Vorzugsweise weist die Beschichtung eine integrale oder diskrete Haftmittelschicht auf, die durch die Aktivierung bzw. Energiezufuhr haftende Eigenschaften entfaltet.

Vorzugsweise wird im Wesentlichen monochromatische, elektromagnetische Strahlung in einem Wellenlängenbereich von 0,78 bis 1000 µm verwendet, was dem infraroten Teil des elektromagnetischen Spektrums entspricht.

Besonders vorteilhafte Weiterbildungen der Erfindung sind in den abhängigen Ansprüchen angegeben, auf die im Folgenden eingegangen wird. Insbesondere treffen die Merkmale der abhängigen Ansprüche, die vom Verfahrensanspruch abhängen, auch auf die beanspruchte Vorrichtung zu. Ebenso ist das beanspruchte Verfahren durch die vom Vorrichtungsanspruch abhängigen Ansprüche gekennzeichnet.

Insbesondere ist die Aktivierungseinrichtung bzw. die Vorrichtung frei von einem Resonator und/oder einem optischen Verstärker. Dies verringert die Größe der Strahlungsquelle und ermöglicht eine Anordnung derer auch in der Nähe des Verbindungsbereichs. Die Leuchtdiodenanordnung dient zur Emission inkohärenter Strahlung und ist derart angeordnet, dass der Verbindungsbereich mit der inkohärenten Strahlung bestrahlt wird. Dies ist im Gegensatz zu einer Vorrichtung zu verstehen, bei der die Strahlung von einem Laser erzeugt wird, der einen Resonator und einen optischen Verstärker aufweist und kohärente Strahlung emittiert.

Vorzugsweise wird die Beschichtung direkt bestrahlt, so dass der Strahlengang zwischen der Strahlungsquelle, insbesondere der Leuchtdiodenanordnung, und dem Verbindungsbereich beim Aktivieren frei ist, insbesondere frei von Strahlformungselementen, weiter insbesondere frei von einer Linse. Gleichermaßen ist bei der Vorrichtung der Strahlengang zwischen der Leuchtdiodenanordnung und dem Verbindungsbereich beim Aktivieren frei, insbesondere frei von Strahlformungselementen, weiter insbesondere frei von einer Linse. Durch diese direkte Bestrahlung des Verbindungbereichs müssen keine weiteren Elemente, beispielsweise Strahlformungselemente, angeschafft und justiert werden, was die Konstruktion zusätzlich vereinfacht und kompakter sowie auch kostengünstiger gestaltet.

Weiter wird die Strahlung von einer Leuchtdiodenanordnung mit zumindest einem Array und bevorzugt mehreren Arrays abgegeben, das/die bevorzugt jeweils mehrere Leuchtdioden-Chips aufweist/en. Entsprechend weist die Vorrichtung eine Leuchtdiodenanordnung auf, bei der zumindest ein Array und bevorzugt mehrere Arrays vorgesehen ist/sind, das/die jeweils mehrere Leuchtdioden-Chips aufweist/en.

Dadurch, dass mehrere Leuchtdioden-Chips zu einem Array zusammengefasst sind, kann die Strahlungsleistung der Leuchtdiodenanordnung erhöht werden, wodurch der Energieeintrag auf den Verbindungsbereich erhöht werden kann. Des Weiteren kann der Verbindungsbereich flächig mit Strahlung beaufschlagt werden.

Gemäß dem Verfahren können die Arrays und/oder Chips entsprechend der Fläche des Verbindungsbereichs zu- und abgeschaltet werden. Gleichermaßen können die Arrays und/oder Chips der Vorrichtung entsprechend der Fläche des Verbindungsbereichs zu- und abschaltbar sein. Das bedeutet, dass die Arrays und/oder Chips getrennt angesteuert werden können und eine Auswahl, bspw. von einem Bediener, getroffen werden kann, welches Array und/oder welcher Chip an- bzw. ausgeschaltet sein soll. Wenn bspw. ein großflächiger Verbindungsbereich aktiviert werden soll, werden viele bzw. alle Arrays und/oder Chips zugeschaltet sein. Wenn hingegen nur ein relativ kleiner Verbindungsbereich aktiviert werden soll, reicht es aus, nur einen kleinen Teil der Arrays, möglicherweise nur ein Array, zuzuschalten. Durch die individuelle Zu- und Abschaltung von Arrays bzw. Chips kann die jeweils gewünschte Fläche des Verbindungsbereichs aktiviert werden.

Es wird vorgezogen, dass die Strahlungsquelle der inkohärenten Strahlung, insbesondere die Leuchtdiodenanordnung, in einem Abstand von 2 bis 20 mm, vorzugsweise 5 bis 15 mm von dem Verbindungbereich beim Aktivieren des Verbindungsbereichs und/oder zwischen dem Werkstück und dem Verbindungsbereich angeordnet ist. Gleichermaßen sind bei der Vorrichtung die Leuchtdiodenanordnung, insbesondere das/die Array(s), und der Verbindungsbereich beim Aktivieren voneinander vorzugsweise 2 bis 20 mm, weiter vorzugsweise 5 bis 15 mm, beabstandet und/oder vorzugsweise ist die Leuchtdiodenanordnung, insbesondere das/die Array(s), zwischen dem Werkstück und dem Verbindungsbereich beim Aktivieren angeordnet. Das heißt, die Leuchtdiodenanordnung ist direkt am Fügespalt vorgesehen. Beispielsweise sind keine zusätzlichen Lichtleiter zum Leiten von in einem entfernt angeordneten Laser erzeugtem, kohärentem Licht nötig. Erneut ergibt sich hieraus eine einfache, kompakte und kostengünstige Konstruktion.

Wenn die Strahlungsquelle der inkohärenten Strahlung bzw. die Leuchtdiodenanordnung zwischen dem Werkstück und dem Verbindungsbereich zum Aktivieren angeordnet ist bzw. der Abstand zwischen der Strahlungsquelle der inkohärenten Strahlung bzw. der Leuchtdiodenanordnung und dem Verbindungbereich beim Aktivieren zwischen 2 und 20 mm bzw. 5 bis 15 mm liegt, kann der Energieeintrag mit ausreichender Intensität erfolgen, und gleichzeitig kann sichergestellt werden, dass ein für die Handhabbarkeit ausreichender Abstand zwischen den einzelnen Komponenten gegeben ist. Darüber hinaus ist eine platzsparende Durchführung der Beschichtung bzw. ein platzsparende Vorrichtung zum Beschichten der Werkstücke möglich.

Weiter vorzugsweise beträgt die Gesamtstrahlungsfläche an der Leuchtdiodenanordnung, insbesondere die Strahlungsfläche der Gesamtheit der Arrays, zumindest 3000 mm², vorzugsweise zumindest 4000 mm². Unter der Gesamtstrahlungsfläche ist die Fläche, die zu einem Strahlungsbeitrag führt, also die Fläche zu verstehen, durch die Strahlung abgegeben werden kann. Wenn die Strahlungsfläche zumindest 3000, vorzugsweise zumindest 4000, weiter vorzugsweise zumindest 5000 mm² beträgt, kann eine zu aktivierende Fläche bzw. ein großflächiger Verbindungsbereich aktiviert und verbunden werden. Dadurch kann die Beschichtung beschleunigt durchgeführt werden.

Weiter vorzugsweise beträgt die Strahlungsleistung eines Leuchtdioden-Chips zumindest 100 W und/oder die Strahlungsleistung eines Arrays zumindest 2 kW, vorzugsweise 2,5 kW. Durch derartige Leuchtdioden kann ein ausreichend großer Energieeintrag auf die Beschichtung erfolgen.

Das Verfahren kann mit einer Vorrichtung durchgeführt werden, bei der die Aufnahme als Durchlauffördereinrichtung ausgestaltet ist, so dass bei dem Verfahren die Werkstücke in eine Durchlaufrichtung befördert werden. Alternativ kann das Verfahren auch mit einer Vorrichtung durchgeführt werden, die als sogenannte Stationärmaschine bezeichnet wird, bei der die Werkstücke stationär sind und die Aktivierungseinrichtung bewegt wird. Auch Kombinationen dieser beiden Konzepte sind denkbar.

Weitere Merkmale und Vorteile der Erfindung werden anhand der nachfolgenden ausführlichen Beschreibung noch näher ersichtlich werden.

### Kurze Beschreibung der Zeichnungen

- Fig. 1: zeigt eine Vorrichtung zum Beschichten von Werkstücken gemäß der vorliegenden Erfindung;
- Fig. 2: zeigt eine Leuchtdiodenanordnung gemäß der Erfindung mit Arrays und Leuchtdioden-Chips.

Ausführliche Beschreibung einer bevorzugten Ausführungsform

Eine bevorzugte Ausführungsform der vorliegenden Erfindung wird nachfolgend ausführlich unter Bezugnahme auf die beigefügten Zeichnungen beschrieben.

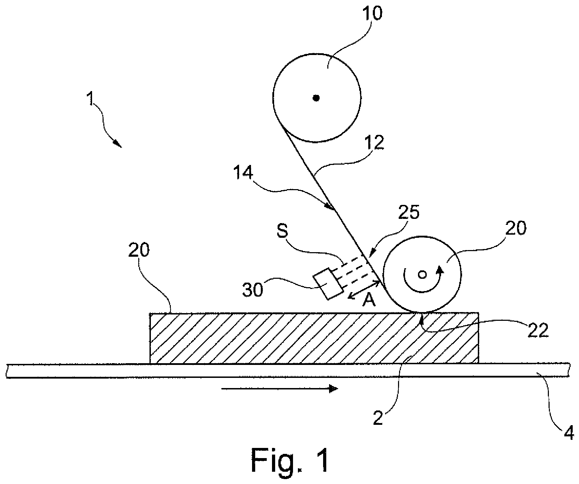

Die Vorrichtung bzw. Beschichtungsvorrichtung 1 zum Beschichten von Werkstücken 2 durch Verbinden einer Beschichtung 12, die als Bandmaterial ausgebildet ist, und des Werkstücks 2 erfolgt in einem Verbindungsbereich 25, wie in Figur 1 in einer Seitenansicht gezeigt. Der Verbindungsbereich 25 ist beim Aktivieren vorgelagert zu einer Andrückeinrichtung 20 vorgesehen, die den Andrückbereich 22 an dem Werkstück 2 durch Andrücken der Beschichtung 12 auf das Werkstück 2 erzeugt. Im Allgemeinen ist der Andrückbereich 22 mit dem Verbindungsbereich 25 identisch, nachdem der Bereich, der vorher aktiviert worden ist, vollständig an das Werkstück angedrückt worden ist.

Eine Aufnahme bzw. Fördereinrichtung 4 bei dem gezeigten Durchlaufverfahren dient zum Aufnehmen und Befördern des Werkstücks bzw. der Werkstücke 2. Die Beförderung erfolgt in der gezeigten Ausführungsform von links nach rechts, wie in Figur 1 durch den Pfeil angegeben.

Die Beschichtung 12 besteht aus einer allgemeinen Schicht und einer Haftmittelschicht bzw. einer Schicht eines haftend machbaren Materials 14, das durch die inkohärente Strahlung in dem Verbindungsbereich 25 aktiviert wird. In der gezeigten Ausführungsform wird die Beschichtung 14 bzw. ein Teil davon aufgeschmolzen.

Die Beschichtung 12 ist als Bandmaterial in Rollenform in der Zuführeinrichtung 10 vorgesehen. Von der Zuführeinrichtung 10 wird die Beschichtung herausgeführt und anschließend zwischen die obere Oberfläche 2a des Werkstücks 2 und die darauf drückende Andrückeinrichtung 20 gebracht. Bei der Andrückeinrichtung 20 handelt es sich um eine Andrückrolle, die auf der Oberfläche 2a des Werkstücks 2 abrollt und auf diese Weise die Beschichtung 12 an die Oberfläche 2a des Werkstücks 2 drückt.

Zwischen der Zuführeinrichtung 10 und der Andrückeinrichtung 20 ist die Aktivierungseinrichtung bzw. Leuchtdiodenanordnung 30 vorgesehen, die derart angeordnet ist, dass elektromagnetische Strahlung, insbesondere Infrarotstrahlung, auf einen Bereich, d.h. den Verbindungsbereich 25, der Beschichtung fällt. Die Beschichtung 12 bzw. das Haftmittel 14 wird in diesem Bereich aktiviert.

Die Aktivierungseinrichtung bzw. Leuchtdiodenanordnung 30 ist vorgelagert bzw. stromaufwärts von der Andrückeinrichtung vorgesehen. Ferner weist die Leuchtdiodenanordnung keinen Resonator oder optischen Verstärker auf. Folglich emittiert die Leuchtdiodenanordnung inkohärente Strahlung auf den Verbindungsbereich.

Aus Figur 1 ist ersichtlich, dass die Beschichtung 12 direkt bestrahlt wird, und in dem Strahlengang S zwischen der Strahlungsquelle 30 und dem Verbindungsbereich 25 "nichts" angeordnet ist. Weder ein Linse noch andere Strahlformungselemente sind vorgesehen.

Der Abstand A zwischen der Leuchtdiodenanordnung 30 und dem Verbindungsbereich 25 kann als kürzeste Länge des Strahlengangs S angegeben werden, wie in Figur 1 gezeigt. Der Abstand A beträgt zwischen 2 und 20 mm und vorzugsweise zwischen 5 bis 15 mm. Mit anderen Worten ist die Leuchtdiodenanordnung 30 zwischen dem Werkstück 2 und dem Verbindungsbereich 25 beim Aktivieren angeordnet.

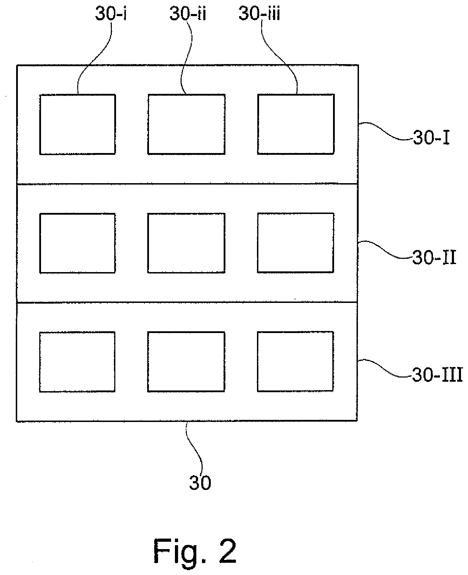

Figur 2 zeigt eine Frontansicht der Leuchtdiodenanordnung 30 mit drei Arrays 30-I, II, III, wobei jedes Array wiederum drei Chips 30-i, ii, iii aufweist. Die einzelnen Arrays und/oder Chips können entsprechend der Größe bzw. Fläche des Verbindungsbereichs 25 zu- und abgeschaltet werden. Die Gesamtstrahlungsfläche der Leuchtdiodenanordnung 30 in Figur 2, d.h. die Summe der Strahlungsfläche der neun Chips, beträgt zumindest 4000 mm². Dabei beträgt die Strahlungsleistung eines Chips 30-i, ii, iii zumindest 100 W und die Strahlungsleistung eines Arrays 30-1, II, III zumindest 2 kW. Mit Bezug auf Figur 2 sei klargestellt, dass es sich bei der Anzahl der dargestellten Arrays und Chips lediglich um eine einfach skizzierbare Leuchtdiodenanordnung handelt, während bei der Umsetzung selbstverständlich die Anzahl der Arrays und der Chips pro Array entsprechend zu wählen ist.

## Patentansprüche

1. Verfahren zum Aufbringen einer Beschichtung (12), die bevorzugt zumindest teilweise aus Kunststoff besteht, auf Werkstücke (2), die zumindest teilweise aus Holz oder Holzwerkstoffen bestehen, bei dem die Beschichtung (12, 14) zumindest in einem Verbindungsbereich (25) aktiviert, insbesondere aufgeschmolzen, wird und
die Beschichtung (12, 14) durch den Verbindungsbereich (25) mit dem Werkstück (2) verbunden wird,
**dadurch gekennzeichnet, dass**
der Verbindungsbereich (25) mit inkohärenter Strahlung, insbesondere Infrarot-Strahlung, die von einer Leuchtdiodenanordnung (30) abgegeben wird, zum Aktivieren, insbesondere Aufschmelzen, bestrahlt wird.

2. Verfahren nach Anspruch 1, bei dem die Beschichtung (12) direkt bestrahlt wird, sodass der Strahlengang (S) zwischen der Strahlungsquelle (30), insbesondere der Leuchtdiodenanordnung, und dem Verbindungsbereich beim Aktivieren frei ist, insbesondere frei von Strahlformungselementen, weiter insbesondere frei von einer Linse.

3. Verfahren nach Anspruch 1 oder 2, bei dem die Strahlung von einer Leuchtdiodenanordnung (30) mit zumindest einem Array und bevorzugt mehreren Arrays (30-I) abgegeben wird, das/die jeweils mehrere Leuchtdioden-Chips (30-i) aufweist/en.

4. Verfahren nach Anspruch 3, bei dem die Arrays und/oder Chips entsprechend der Fläche des Verbindungsbereichs zu- und abgeschaltet werden.

5. Verfahren nach einem der vorhergehenden Ansprüche, bei dem die Strahlungsquelle (30) der inkohärenten Strahlung, insbesondere die Leuchtdiodenanordnung, in einem Abstand (A) von 2 bis 20 mm, vorzugsweise 5 bis 15 mm, von dem Verbindungsbereich beim Aktivieren des Verbindungsbereichs angeordnet ist und/oder zwischen dem Werkstück (2) und dem Verbindungsbereich angeordnet ist.

6. Vorrichtung zum Beschichten von Werkstücken (2), die zumindest teilweise aus Holz oder Holzwerkstoffen bestehen, mit zumindest einer Beschichtung, die bevorzugt zumindest teilweise aus Kunststoff besteht, durch Verbinden einer Beschichtung (12) und des Werkstücks (2) in einem Verbindungsbereich, wobei die Vorrichtung aufweist:
eine Aufnahme (4) zum Aufnehmen zumindest des einen Werkstücks (2) und
eine Aktivierungseinrichtung (30) mit einer Leuchtdiodenanordnung zur Bestrahlung des Verbindungsbereichs (25) zum Aktivieren, insbesondere Aufschmelzen, der Beschichtung in dem Verbindungsbereich,
**dadurch gekennzeichnet, dass**
die Leuchtdiodenanordnung (30) zur Emission von Strahlung (S), vorzugsweise Infrarot-Strahlung, dient und derart angeordnet ist, dass der Verbindungsbereich mit der Strahlung bestrahlt wird, und dadurch, dass
die Leuchtdiodenanordnung (30) zumindest ein Array und bevorzugt mehrere Arrays (30-I) aufweist, das/die jeweils mehrere Leuchtdioden-Chips (30-i) aufweist/en.

7. Vorrichtung nach Anspruch 6, bei der die Aktivierungseinrichtung (30) und/oder die Vorrichtung frei von einem Resonator und/oder einem optischen Verstärker ist und/oder die Leuchtdiodenanordnung (30) zur Emission inkohärenter Strahlung dient und derart angeordnet ist, dass der Verbindungsbereich (25) mit inkohärenter Strahlung bestrahlt wird.

8. Vorrichtung nach Anspruch 6 oder 7, bei der die Arrays und/oder Chips entsprechend der Fläche des Verbindungsbereichs zu- und abschaltbar sind.

9. Vorrichtung einem der Ansprüche 6 bis 8, bei der der Strahlengang (S) zwischen der Leuchtdiodenanordnung (30), insbesondere dem/den Array(s), und dem Verbindungsbereich beim Aktivieren frei ist, insbesondere frei von Strahlformungselementen, weiter insbesondere frei von einer Linse.

10. Vorrichtung nach einem der Ansprüche 6 bis 9, bei der die Leuchtdiodenanordnung (30), insbesondere das/die Array(s), und der Verbindungsbereich beim Aktivieren voneinander 2 bis 20 mm, vorzugsweise 5 bis 15 mm, beabstandet ist und/oder zwischen dem Werkstück (2) und dem Verbindungsbereich (25) beim Aktivieren angeordnet ist.

11. Vorrichtung nach einem der Ansprüche 6 bis 10, bei der die Gesamtstrahlungsfläche an der Leuchtdiodenanordnung, insbesondere die Strahlungsfläche der Gesamtheit der Arrays, zumindest 3000 mm², vorzugsweise zumindest 4000 mm² beträgt.

12. Vorrichtung nach einem der Ansprüche 6 bis 11, bei der die Strahlungsleistung eines Leuchtdioden-Chips (30-i, ii, iii) zumindest 100 W und/oder die Strahlungsleistung eines Arrays (30-I, II, III) zumindest 2 kW, vorzugsweise 2,5 kW, beträgt.

## Claims

1. Method for applying a coating (12), which preferably consists at least partly of plastic, to workpieces (2) which consist at least partly of wood or derived timber products, in which the coating (12, 14) is activated, in particular melted, at least in a bonding region (25) and the coating (12, 14) is joined to the workpiece (2) by the bonding region (25), **characterised in that** the bonding region (25) is irradiated with incoherent radiation, in particular infrared radiation, which is released by a light-emitting diode arrangement (30), for activation, in particular melting.

2. Method according to claim 1, in which the coating (12) is irradiated directly, so that the beam path (S) between the radiation source (30), in particular the light-emitting diode arrangement, and the bonding region is free during activation, in particular free of beam-shaping elements, furthermore in particular free of a lens.

3. Method according to claim 1 or 2, in which the radiation is released by a light-emitting diode arrangement (30) having at least one array and preferably several arrays (30-1) which has/have in each case several light-emitting diode chips (30-i).

4. Method according to claim 3, in which the arrays and/or chips are switched on and switched off in accordance with the surface of the bonding region.

5. Method according to one of the preceding claims, in which the radiation source (30) of the incoherent radiation, in particular the light-emitting diode arrangement, is arranged at a distance (A) of 2 to 20 mm, preferably 5 to 15 mm, from the bonding region during activation of the bonding region and/or is arranged between the workpiece (2) and the bonding region.

6. Device for coating workpieces (2), which consist at least partly of wood or derived timber products, having at least one coating, which preferably consists at least partly of plastic, by joining a coating (12) and the workpiece (2) in a bonding region, wherein the device has:
a support (4) for supporting the at least one workpiece (2) and
an activation device (30) having a light-emitting diode arrangement for irradiating the bonding region (25) for activation, in particular melting, of the coating in the bonding region,
**characterised in that**
the light-emitting diode arrangement (30) serves for the emission of radiation (S), preferably infrared radiation, and is arranged such that the bonding region is irradiated with the radiation, and **in that**
the light-emitting diode arrangement (30) has at least one array and preferably several arrays (30-1) which has/have in each case several light-emitting diode chips (30-i).

7. Device according to claim 6, in which the activation device (30) and/or the device is free of a resonator and/or an optical amplifier and/or the light-emitting diode arrangement (30) serves for the emission of incoherent radiation and is arranged such that the bonding region (25) is irradiated with incoherent radiation.

8. Device according to claim 6 or 7, in which the arrays and/or chips can be switched on and switched off in accordance with the surface of the bonding region.

9. Device according to one of claims 6 to 8, in which the beam path (S) between the light-emitting diode arrangement (30), in particular the array(s), and the bonding region is free during activation, in particular free of beam-shaping elements, furthermore in particular free of a lens.

10. Device according to one of claims 6 to 9, in which the light-emitting diode arrangement (30), in particular the array(s), and the bonding region are distanced 2 to 20 mm, preferably 5 to 15 mm, from one another during activation and/or the light-emitting diode arrangement (30), in particular the array(s), is arranged between the workpiece (2) and the bonding region (25) during activation.

11. Device according to one of claims 6 to 10, in which the entire radiation surface on the light-emitting diode arrangement, in particular the radiation surface of the totality of the arrays, is at least 3,000 mm², preferably at least 4,000 mm².

12. Device according to one of claims 6 to 11, in which the radiated power of a light-emitting diode chip (30-i, ii, iii) is at least 100 W and/or the radiated power of an array (30-1, II, III) is at least 2 kW, preferably 2.5 kW.

## Revendications

1. Procédé d'application d'un revêtement (12) qui se compose de préférence au moins partiellement de matière plastique, sur des pièces à usiner (2) qui se composent au moins partiellement de bois ou de matériaux dérivés du bois, pour lequel
le revêtement (12, 14) est activé au moins dans une zone de raccordement (25), en particulier fondu, et
le revêtement (12, 14) est raccordé par la zone de raccordement (25) à la pièce à usiner (2),
**caractérisé en ce que**
la zone de raccordement (25) est irradiée avec un rayonnement incohérent, en particulier un rayonnement infrarouge qui est émis par un agencement de diode électroluminescente (30) pour l'activation, en particulier la fusion.

2. Procédé selon la revendication 1, pour lequel le revêtement (12) est directement irradié de sorte que la trajectoire de faisceau (S) soit exempte entre la source de rayonnement (30), en particulier l'agencement de diode électroluminescente, et la zone de raccordement lors de l'activation, en particulier exempte d'éléments de formation de rayon, plus particulièrement exempte d'une lentille.

3. Procédé selon la revendication 1 ou 2, pour lequel le rayonnement est émis par un agencement de diode électroluminescente (30) avec au moins un réseau et de préférence plusieurs réseaux (30-I) qui présente(nt) respectivement plusieurs puces de diode électroluminescente (30-i).

4. Procédé selon la revendication 3, pour lequel les réseaux et/ou puces sont activés et désactivés selon la surface de la zone de raccordement.

5. Procédé selon l'une quelconque des revendications précédentes, pour lequel la source de rayonnement (30) du rayonnement incohérent, en particulier l'agencement de diode électroluminescente, est agencée à une distance (A) de 2 à 20 mm, de préférence de 5 à 15 mm, de la zone de raccordement lors de l'activation de la zone de raccordement et/ou est agencée entre la pièce à usiner (2) et la zone de raccordement.

6. Dispositif de revêtement de pièces à usiner (2) qui se composent au moins partiellement de bois ou de matériaux dérivés du bois, avec au moins un revêtement qui se compose de préférence au moins partiellement de matière plastique, par raccordement d'un revêtement (12) et de la pièce à usiner (2) dans une zone de raccordement, dans lequel le dispositif présente :
un logement (4) pour la réception au moins de l'une pièce à usiner (2) et
un dispositif d'activation (30) avec un agencement de diode électroluminescente pour le rayonnement de la zone de raccordement (25) pour l'activation, en particulier la fonte, du revêtement dans la zone de raccordement,
**caractérisé en ce que**
l'agencement de diode électroluminescente (30) sert à l'émission de rayonnement(S), de préférence de rayonnement infrarouge et est agencé de telle manière que la zone de raccordement est irradiée avec le rayonnement, et **en ce que**
l'agencement de diode électroluminescente (30) présente au moins un réseau et de préférence plusieurs réseaux (30-I) qui présente(nt) respectivement plusieurs puces de diode électroluminescente (30-i).

7. Dispositif selon la revendication 6, pour lequel le dispositif d'activation (30) et/ou le dispositif est exempt d'un résonateur et/ou d'un amplificateur optique et/ou l'agencement de diode électroluminescente (30) sert à l'émission du rayonnement incohérent et est agencé de telle manière que la zone de raccordement (25) est irradiée avec un rayonnement incohérent.

8. Dispositif selon la revendication 6 ou 7, pour lequel les agencements et/ou puces sont activés et désactivés selon la surface de la zone de raccordement.

9. Dispositif selon l'une quelconque des revendications 6 à 8, pour lequel la trajectoire de rayonnement (S) entre l'agencement de diode électroluminescente (30), en particulier le/les réseau(x), et la zone de raccordement est exempte lors de l'activation, en particulier exempte d'éléments de formation de rayon, plus particulièrement exempte d'une lentille.

10. Dispositif selon l'une quelconque des revendications 6 à 9, pour lequel l'agencement de diode électroluminescente (30), en particulier le/les réseau(x) et la zone de raccordement est espacé lors de l'activation l'un de l'autre de 2 à 20 mm, de préférence de 5 à 15 mm et/ou est agencé entre la pièce à usiner (2) et la zone de raccordement (25) lors de l'activation.

11. Dispositif selon l'une quelconque des revendications 6 à 10, pour lequel la surface de rayonnement entière sur l'agencement de diode électroluminescente, en particulier la surface de rayonnement de l'intégralité des réseaux s'élève au moins à 3000 mm², de préférence au moins 4000 mm².

12. Dispositif selon l'une quelconque des revendications 6 à 11, pour lequel la puissance de rayonnement d'une puce de diode électroluminescente (30-i, ii, iii) s'élève au moins à 100 W et/ou la puissance de rayonnement d'un réseau (30-I, II, III) s'élève au moins à 2 kW, de préférence 2,5 kW.
